# FASCICULE DE BREVET EUROPEEN

(11) **EP 1 428 609 B1**
(45) Date de publication et mention de la délivrance du brevet: **29.07.2020**
(21) Numéro de dépôt: 03293088.5
(22) Date de dépôt: 10.12.2003
(51) Int. Cl.: B22F 7/04, B23K 35/02, B22F 5/00, C23C 26/02

(54) **PROCÉDÉ POUR RÉALISER UN REVETEMENT SUR UN ARTICLE ET/OU UN SUBSTRAT MÉTALLIQUE**
VERFAHREN ZUR OBENFLÄCHENBESCHICHTUNG VON METALLGEGENSTÄNDEN UND/ODER -SUBSTRATEN
PROCESS FOR COATING METAL ARTICLES AND/OR SUBSTRATES

(30) Priorité: 13.12.2002 FR 0215800
(43) Date de publication de la demande: 16.06.2004
(73) Titulaire: Safran Aircraft Engines, 75015 Paris (FR)
(72) Inventeur: Mons, Claude, 77176 Savigny le Temple (FR)
(74) Mandataire: Cabinet Beau de Loménie

(56) Documents cités:
- EP-A- 0 686 457
- EP-A- 1 029 629
- FR-A- 2 604 448
- FR-A- 2 657 801
- US-A- 3 778 586
- US-A- 5 523 169
- US-A- 5 577 655

## Description

L'invention concerne des articles métalliques soumis à des températures élevées lorsqu'ils sont utilisés.

En particulier, l'invention concerne un procédé pour fabriquer facilement de tels articles qui doivent résister à la corrosion et surtout à une usure par frottement provenant de contacts répétitifs avec une ou plusieurs autres pièces, afin d'obtenir des performances plus satisfaisantes et une durée de vie plus longue pour ces articles.

Il existe de nombreuses applications dans lesquelles les articles métalliques sont exposés à des températures élevées. Ces applications concernent par exemple diverses applications aérospatiales ainsi que des opérations terrestres où des pièces sont utilisées dans des moteurs à turbine à gaz.

Dans toutes ces applications, il est important de prévoir des moyens pour éviter une usure trop rapide des articles soumis à des frottements ou des contacts pendant leur utilisation normale du fait que cette usure raccourcit considérablement leur durée de vie et peut créer de réels problèmes en ce qui concerne leurs performances et la sécurité.

Les articles de ce type, tels que des pièces roulantes ou des cames, présentent la plupart du temps une surface de contact non plane pouvant être de forme plus ou moins irrégulière.

Classiquement, ces articles sont revêtus, en particulier sur leur surface de contact, d'un revêtement augmentant leurs propriétés de résistance à l'usure sous des températures élevées.

De manière habituelle, ces revêtement sont déposés par différentes techniques telles que dépôt sous vide, pulvérisation de plasma, électrolyse, voie chimique ou autre.

Compte tenu de la forme très complexe que peut présenter la surface de contact à revêtir, il est donc difficile d'obtenir, par ses techniques de dépôt direct des épaisseurs uniformes. En outre, le coût et les limites de ces techniques de dépôt ne permettent pas d'obtenir des épaisseurs importantes pour ces revêtements de protection.

Le document EP 1 029 629 porte sur un procédé pour revêtir une pièce au moyen d'une bande obtenue par mise en compression et comprenant de la poudre métallique, un liant organique et un produit d'aide à la mise en compression.

Le document US 5 523 169 divulgue un ruban métallique de réparation pour superalliages.

Le document US 5 577 655 divulgue un ruban ou film métallique flexible et des adhésif associés.

La présente invention vise notamment à pallier ces inconvénients inhérents aux limites d'application des techniques de dépôt de l'art antérieur, notamment des techniques de dépôt direct précitées.

A cet effet, un objet de la présente invention est de proposer un procédé pour le traitement d'articles métalliques capables de résister tout particulièrement aux frottements dans des conditions de fonctionnement à température élevée.

Un autre objet de la présente invention est de fournir des articles métalliques munis d'un revêtement leur permettant de résister tout particulièrement aux frottements dans des conditions de fonctionnement à température élevée.

Egalement, la présente invention porte sur un revêtement pour un article métallique, destiné à améliorer la résistance aux frottements à température élevée.

Actuellement on sait que divers alliages, y compris la plupart des superalliages, sont caractérisés par un certain degré de résistance à l'oxydation et à la corrosion en milieu agressif ainsi que par une bonne résistance mécanique aux températures élevées.

La présente invention tire avantage de ces caractéristiques en proposant un procédé pour réaliser un revêtement sur au moins une face à protéger d'un article et/ou d'un substrat métallique pour en améliorer les performances de résistance à l'usure par frottement, en particulier à haute température, caractérisé en ce qu'il comprend les étapes suivantes :
- fournir une feuille souple issue d'au moins une plaque obtenue par la technique de coulée en bande par sérigraphie à partir d'un matériau visqueux comprenant un liant métallique de brasure et de la poudre métallique d'un superalliage,
- découper ladite feuille souple aux dimensions de ladite face à protéger d'un article et/ou d'un substrat métallique afin de constituer une préforme,
- disposer ladite préforme sur ladite face à protéger d'un article et/ou d'un substrat métallique, et
- porter l'ensemble à une température supérieure à la température de fusion du liant métallique de brasure mais inférieure à la température de fusion de ladite poudre métallique, afin de former un revêtement en réalisant une liaison entre ladite préforme et ladite face à protéger d'un article et/ou d'un substrat métallique.

Afin d'aboutir aux objectifs précités, selon la présente invention, on propose donc de mettre en œuvre un revêtement qui permet d'appliquer la technique dite « RBD », à savoir rechargement par brasage diffusion ou rechargement par brasure-diffusion. A cet effet, le revêtement utilisé comprend une poudre métallique d'un superalliage dans un liant de brasure, tel qu'un liant métallique.

La poudre métallique peut être complétée par de la poudre de céramique telle que des nitrures, des carbures, des borures, etc... afin de renforcer la dureté du revêtement.

De cette manière, on comprend que par la présence de la poudre de superalliage, le revêtement offre les mêmes caractéristiques de résistance à l'usure par frottement que le superalliage en masse.

Egalement un tel agencement est facile à mettre en œuvre du fait de l'utilisation de la technique de coulée en bande par sérigraphie.

De préférence, ladite poudre métallique présente une taille de grain, de préférence inférieure ou égale à 90µm, et préférentiellement comprise entre 40 et 65 µm.

Selon une disposition préférentielle, ladite feuille souple est issue d'au moins deux plaques obtenues par la technique de coulée en bande par sérigraphie à partir d'un matériau visqueux, lesdites plaques étant superposées puis, au moins partiellement séchées pour former ladite feuille souple.

Bien entendu, lorsque la forme de la surface à protéger de l'article et/ou du substrat métallique est simple, on peut réaliser le coulage en bande directement sur cette surface, plaque après plaque, pour former la feuille souple.

Une telle mise en œuvre permet l'obtention de feuilles souples épaisses plus facilement qu'avec les techniques de dépôt direct classiques.

De préférence, le métal de base de l'alliage du substrat est choisi dans le groupe comprenant le Fe, le Ni et le Co, et l'alliage du substrat est un super alliage.

La présente demande porte aussi sur un revêtement non revendiqué destiné à un article et/ou un substrat métallique pour en améliorer les performances de résistance à l'usure par frottement, en particulier à haute température, caractérisé en ce qu'il est formé d'une feuille souple issue d'au moins une plaque obtenue par la technique de coulée en bande par sérigraphie à partir d'un matériau visqueux comprenant un liant métallique de brasure et de la poudre métallique d'un superalliage.

De préférence, ledit superalliage est à base de Ni ou de Co.

Il est à noter que ladite feuille souple présente une épaisseur qui peut varier entre 0,3 mm et 5 mm, de préférence entre 0,5 mm et 2 mm.

La présente demande porte également sur un article et/ou un substrat métallique non revendiqués, caractérisé en ce qu'il porte un revêtement du type précité.

Enfin, la présente demande porte aussi sur une came de guidage non revendiquée pour au moins un galet d'un système de déploiement d'un volet d'une tuyère de type convergente/divergente d'un turboréacteur, caractérisé en ce qu'il est constitué d'un article du type défini dans le paragraphe qui précède.

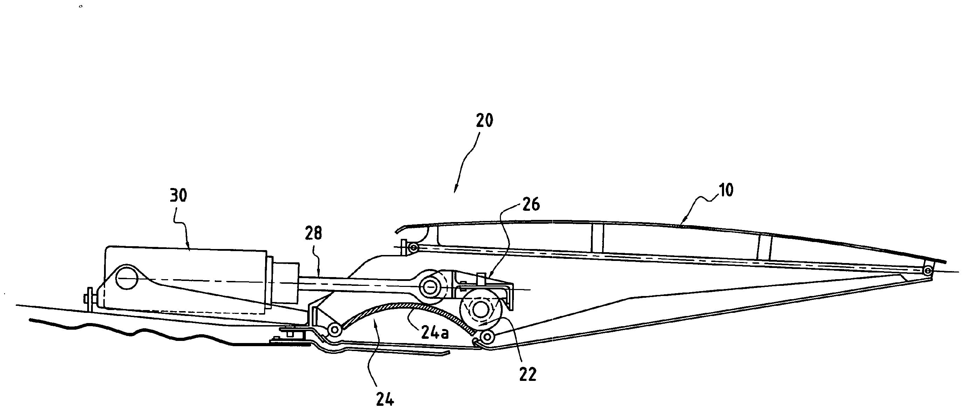

D'autres avantages et caractéristiques de l'invention ressortiront à la lecture de la description suivante faite à titre d'exemple et en référence aux dessins annexés dans lesquels :
- la figure unique montre une vue en section longitudinale schématique d'un système de commande des volets d'une tuyère de type convergente/divergente d'un turboréacteur.

Comme on peut le voir sur cette figure unique, pour le pilotage de la position de chaque volet 10 d'une tuyère de type convergente/divergente d'un turboréacteur, on a recours à un système de déploiement 20.

Ce système de déploiement 20 comporte des galets 22 qui roulent sur une came 24.

Les galets 22 sont de préférence du type à roulements et ils sont réalisés en particulier en acier. Ces galets 22 sont montés rotatifs sur un support 26 articulé à pivotement à l'extrémité libre de la tige 28 d'un piston de commande 30.

La came 24 présente une face supérieure formant une face de guidage 24a pour les galets 22 et qui présente un contour dont la forme est sensiblement une portion de cylindre de section circulaire.

Ainsi, on comprend que cette face de guidage 24a de la came 24 est soumise, outre aux températures élevées de fonctionnement de la tuyère du turboréacteur, à des forces de frottement engendrées par le roulement et le frottement de la surface de roulement des galets 22.

Dans ce cas, la température atteinte par le système de déploiement 20 est comprise entre 20°C et 900°C, et cette température est généralement de l'ordre de 450°C.

La came 24 est réalisée en acier, ou en superalliage, de préférence en en superalliage à base nickel ou cobalt, par exemple NK15CADT ou KC25NW.

Selon l'invention, on va réaliser un revêtement de la face de guidage 24a de la came 24 au moyen d'une feuille souple.

Pour la réalisation de cette feuille souple, on emploie la technique de coulée en bande par sérigraphie. Pour cela en premier lieu, de la poudre d'un superalliage est mêlée à un liant métallique de brasure pour former un matériau visqueux à la température d'utilisation qui est, de préférence, la température ambiante mais qui peut être aussi une température supérieure à la température ambiante.

Ensuite, on réalise des plaques minces en nappant ce matériau visqueux sur une grille métallique fine : en étalant le matériau, son passage à travers les mailles fines de la grille permet l'obtention d'une plaque présentant une épaisseur comprise entre 0,3 et 2 mm.

De préférence, les mailles de la grille présentent une dimension comprise entre 0,1 et 0,5 mm, et de préférence entre 0,1 mm et 0,2 mm.

La granulométrie de poudre est choisie de façon à avoir une taille de grain relativement fine, de préférence inférieure ou égale à 90µm, et préférentiellement comprise entre 40 et 65µm.

Les plaques sont superposées pour former la feuille souple précitée qui est alors mise à sécher, au moins partiellement, pour permettre la liaison entre le liant des différentes plaques.

Après ce séchage, au moins partiel, on obtient une feuille souple qui peut être manipulée aisément sans risque de la déchirer.

A ce stade, on est en présence d'une feuille souple présentant une épaisseur qui peut varier entre 0,3 mm et 2 mm, et de préférence entre 0,5 mm et 1 mm.

Ensuite, cette feuille souple est découpée à la forme du contour développé de la face de guidage 24a, en formant une préforme qui est placée de manière à recouvrir la face de guidage 24a.

La liaison de la préforme avec le matériau constituant la came 24 est réalisée par la technique de brasage diffusion en portant la came revêtue de la préforme à une température supérieure à la température de fusion du liant métallique de brasure mais inférieure à la température de fusion du matériau constituant la came 24 et du superalliage.

A titre d'exemple, l'ensemble est porté à 1050°C.

A la fin de cette opération de brasage, on obtient une couche de superalliage reliée à la came 24 par des liaisons métallurgiques.

Il est alors possible d'effectuer une reprise de la surface par usinage, comme le meulage, ou par polissage.

On comprend donc que l'utilisation de cette technique de fabrication d'une préforme par sérigraphie permet l'obtention, pour de grandes surfaces (facilement jusqu'à 400 cm², ou plus), d'une couche de revêtement qui se conforme complètement au relief de la face à protéger de l'article métallique, quelle que soit la complexité du relief en question.

Cette technique très souple de mise en œuvre permet en outre l'obtention de préformes d'une stricte épaisseur prédéterminée et qui est contrôlée sur toute sa surface. On peut en effet, souhaiter une épaisseur constante sur toute la surface de la préforme, ou bien obtenir des préformes avec certaines zones de surépaisseur ou de sous-épaisseur.

Egalement, cette technique permet une répétitivité des préformes obtenues en réalisant la même suite d'opérations avec des conditions opératoires identiques, ce qui est nécessaire dans un cadre d'exploitation industriel.

De préférence, on utilise une poudre d'un superalliage à base nickel ou cobalt tels que les suivants (pourcentage en proportion pondérale) :
Superalliage 1: à base Ni, Co (18%), Cr (11%), Mo (4%), Al (3%), Ti (2,5%), Si (1%), B (0,7%) et traces d'autres éléments.
Superalliage 2: à base Co, Ni (25%), Cr (23%), W (6%), B (0,7%), C (0,4%) et traces d'autres éléments.
Superalliage 3: à base Co, Ni (29%), Cr (18%), W (5%), Si (1,4), B (0,9%), C (0,35%) et traces d'autres éléments.

Parmi les autres applications de la présente invention, on peut noter plus largement l'obtention de revêtements de secteurs et/ou surfaces abradables, ainsi que le rechargement de surfaces d'usure sur des portées de pièces en superalliages.

## Revendications

1. Procédé pour réaliser un revêtement sur au moins une face à protéger d'un article et/ou d'un substrat métallique pour en améliorer les performances de résistance à l'usure par frottement à haute température, **caractérisé en ce qu'**il comprend les étapes suivantes :
- fournir une feuille souple issue d'au moins une plaque obtenue par la technique de coulée en bande par sérigraphie à partir d'un matériau visqueux comprenant un liant métallique de brasure et de la poudre métallique d'un superalliage,
- découper ladite feuille souple aux dimensions de ladite face à protéger d'un article et/ou d'un substrat métallique afin de constituer une préforme,
- disposer ladite préforme sur ladite face à protéger d'un article et/ou d'un substrat métallique, et
- porter l'ensemble à une température supérieure à la température de fusion du liant métallique de brasure mais inférieure à la température de fusion de ladite poudre métallique, afin de former un revêtement en réalisant une liaison entre ladite préforme et ladite face à protéger d'un article et/ou d'un substrat métallique.

2. Procédé selon la revendication 1, **caractérisé en ce que** ladite poudre métallique présente une taille de grain inférieure ou égale à 90µm.

3. Procédé selon la revendication 2, **caractérisé en ce que** ladite poudre métallique présente une taille de grain comprise entre 40 et 65 µm.

4. Procédé selon l'une quelconque des revendications précédentes, **caractérisé en ce que** ladite feuille souple est issue d'au moins deux plaques obtenues par la technique de coulée en bande par sérigraphie à partir d'un matériau visqueux, lesdites plaques étant superposées puis au moins partiellement séchées pour former ladite feuille souple.

5. Procédé selon l'une quelconque des revendications précédentes, **caractérisé en ce que** le métal de base de l'alliage du substrat est choisi dans le groupe comprenant le Fe, le Ni, le Co.

6. Procédé selon l'une des revendications précédentes, **caractérisé en ce que** ladite feuille souple présente une épaisseur qui varie entre 0,3 mm et 2 mm.

7. Procédé selon la revendication 6, **caractérisé en ce que** ladite feuille souple présente une épaisseur qui varie entre 0,5 mm et 1 mm.

## Patentansprüche

1. Verfahren zur Herstellung einer Beschichtung auf wenigstens einer zu schützenden Fläche eines Metallartikels und/oder eines Metallsubstrats, um dessen Leistung der Reibverschleißfestigkeit bei hoher Temperatur zu verbessern, **dadurch gekennzeichnet, dass** es die folgenden Schritte umfasst:
- Bereitstellen einer flexiblen Folie, die aus wenigstens einer Platte hervorgegangen ist, welche durch die Bahnengusstechnik mittels Siebdruck aus einem viskosen Material, das ein metallisches Lötbindemittel und Metallpulver einer Superlegierung umfasst, erhalten wird,
- Zuschneiden der flexiblen Folie auf die Abmessungen der zu schützenden Fläche eines Metallartikels und/oder eines Metallsubstrats, um einen Vorformling zu bilden,
- Anordnen des Vorformlings auf der zu schützenden Fläche eines Metallartikels und/oder eines Metallsubstrats, und
- Erhitzen des Ganzen auf eine Temperatur, die höher als die Schmelztemperatur des metallischen Lötbindemittels, aber niedriger als die Schmelztemperatur des Metallpulvers ist, um unter Herstellen einer Verbindung zwischen dem Vorformling und der zu schützenden Fläche eines Metallartikels und/oder eines Metallsubstrats eine Beschichtung zu bilden.

2. Verfahren nach Anspruch 1, **dadurch gekennzeichnet, dass** das Metallpulver eine Korngröße von weniger als oder gleich 90 µm aufweist.

3. Verfahren nach Anspruch 2, **dadurch gekennzeichnet, dass** das Metallpulver eine Korngröße im Bereich zwischen 40 und 65 µm aufweist.

4. Verfahren nach einem der vorhergehenden Ansprüche, **dadurch gekennzeichnet, dass** die flexible Folie aus wenigstens zwei Platten hervorgegangen ist, die durch die Bahnengusstechnik mittels Siebdruck aus einem viskosen Material erhalten werden, wobei die Platten übereinander angeordnet werden, anschließend wenigstens teilweise getrocknet werden, um die flexible Folie zu bilden.

5. Verfahren nach einem der vorhergehenden Ansprüche, **dadurch gekennzeichnet, dass** das Basismetall der Legierung des Substrats aus der Gruppe umfassend Fe, Ni, Co ausgewählt ist.

6. Verfahren nach einem der vorhergehenden Ansprüche, **dadurch gekennzeichnet, dass** die flexible Folie eine Dicke aufweist, die zwischen 0,3 mm und 2 mm variiert.

7. Verfahren nach Anspruch 6, **dadurch gekennzeichnet, dass** die flexible Folie eine Dicke aufweist, die zwischen 0,5 mm und 1 mm variiert.

## Claims

1. A method of making a coating on at least one face to be protected of a metal substrate and/or article in order to improve its performance in terms of resistance to friction wear, in particular at high temperature, **characterized in that** the method comprises the following steps:
providing a flexible sheet derived from at least one plate obtained by the technique of casting a strip by silkscreen printing from a viscous material made of a binder and a metal powder of a superalloy;
cutting said flexible sheet to the dimensions of said face to be protected of said metal substrate and/or article in order to constitute a preform;
placing said preform on said face to be protected of said metal substrate and/or article; and
raising the assembly to a temperature higher than the melting temperature of the binder but lower than the melting temperature of said metal powder so as to form a coating by establishing a bond between said preform and said face to be protected of said metal substrate and/or article.

2. A method according to claim 1, **characterized in that** said metal powder presents grain size that is preferably less than or equal to 90 µm.

3. A method according to claim 2, **characterized in that** said metal powder presents grain size comprised between 40 and 65 µm.

4. A method according to any of the preceding claims, **characterized in that** said flexible sheet is derived from at least two plates obtained by the technique of casting strips by silkscreen printing from a viscous material, said strips being superposed and then dried, at least in part, in order to form said flexible sheet.

5. A method according to any of the preceding claims, **characterized in that** the base metal of the alloy of the substrate is selected from the group comprising Fe, Ni, and Co.

6. A method according to any of the preceding claims, **characterized in that** said flexible sheet presents thickness lying in the range 0.3 mm to 2 mm.

7. A method according to claim 6, **characterized in that** said flexible sheet presents thickness lying in the range 0.5 mm to 1 mm.
